# EUROPEAN PATENT APPLICATION

(11) **EP 1 748 587 A2**
(43) Date of publication of application: **31.01.2007**
(21) Application number: 06015672.6
(22) Date of filing: 27.07.2006
(51) Int. Cl.: H04H 7/00

(54) **Analyzing apparatus and analyzing method for digital broadcasting signal**

(30) Priority: 29.07.2005 JP 2005220664
(71) Applicant: Anritsu Corporation, Atsugi-shi Kanagawa 243-8555 (JP)
(72) Inventor: Ikeya, Tomohito Intellectual Property Prom. Dept., Atsugi-shi, Kanagawa 243-8555 (JP); Maruyama, Tatsuya Intellectual Property Pom. Dept., Atsugi-shi, Kanagawa 243-8555 (JP)
(74) Representative: Balsters, Robert

(57) **Abstract**

At the time of spectrum measurement of a received digital broadcasting signal, in order to easily specify a spectrum waveform of a channel targeted for analysis measurement, a spectrum measurement control section (37) has a measurement frequency range setting section (17a) for setting to a spectrum measuring section (12) information corresponding to a measurement frequency range specified by an operating section (13) at the time of spectrum measurement, and then, detecting data of a spectrum waveform in the specified measurement frequency range, and a spectrum display section (17b) that causes a display device (14) to display the detected spectrum waveform together with a quadrature coordinate of a horizontal axis frequency and vertical axis power, and further has an identification display section (39) for reading out from a channel frequency memory (38) frequency information corresponding to a measurement target channel specified by operation of the operating section (13), and then, identifiably displaying on a screen of the display device (14) a spectrum waveform of the measurement target channel and a spectrum waveform of another channel.

## Description

The present invention relates to an analyzing apparatus and an analyzing method for digital broadcasting signals, and particularly to an analyzing apparatus and an analyzing method for digital broadcasting signals employing a technique for facilitating measurement of spectrum waveforms when analyzing a quality of digital broadcasting signals such as a Digital Broadcasting-Terrestrial.

In Japan, the digital terrestrial broadcasting as described above has started its services in accordance with ISDB-T (Integrated Services Digital Broadcasting for Terrestrial) System in some areas since the end of 2003.

In addition, in Europe, the services in accordance with DVB-T (Digital Video Broadcasting-Terrestrial) System have been started in ten or more countries including Great Britain, Sweden, Spain, Finland, Norway, Germany, Holland, France, Ireland and the like one after another.

When providing such digital terrestrial broadcasting services, service providers or the like need to check a receiving state in each service area.

Thus, the service providers or the like check a radio state such as the presence or absence of jamming over a wide frequency range in a target area and actually receive and demodulate a terrestrial digital broadcasting signal of a desired channel. Then, they measure a bit error rate (BER) or a modulation error ratio (MER) relevant to the modulated signal, and then, analyze a quality of a terrestrial digital broadcasting signal based on a result of the measurement, thereby judging whether or not a receiving state is proper.

As described above, a digital broadcasting signal analyzing apparatus for receiving and demodulating a terrestrial digital broadcasting signal and measuring its BER, MER and the like is described in patent document 1 below, for example.

Patent document 1: Japanese Patent No. 3625760 (Refer to PATENT ABSTRACT JP 2002-124931).

When analyzing a quality of a terrestrial digital broadcasting signal, it is necessary to check the presence or absence of jamming in the receiving target area, as described above. Thus, it is necessary to measure spectra in a wide frequency range including a UHF band in which a terrestrial digital broadcasting signal is used, as well as to measure BER or MER of the terrestrial digital broadcasting signal of a desired channel.

Therefore, such measurement requires an apparatus for receiving and demodulating a digital broadcasting signal of a desired channel and measuring BER or MER for analyzing a quality and an apparatus for measuring spectra in a wide frequency range including a UHF band.

Hence, it is uneconomical to prepare two types of individual apparatuses for measurement separately, as described above, and a measuring work becomes complicated as well.

In order to solve this problem, a digital broadcasting signal analyzing apparatus comprising a spectrum measuring function is provided.

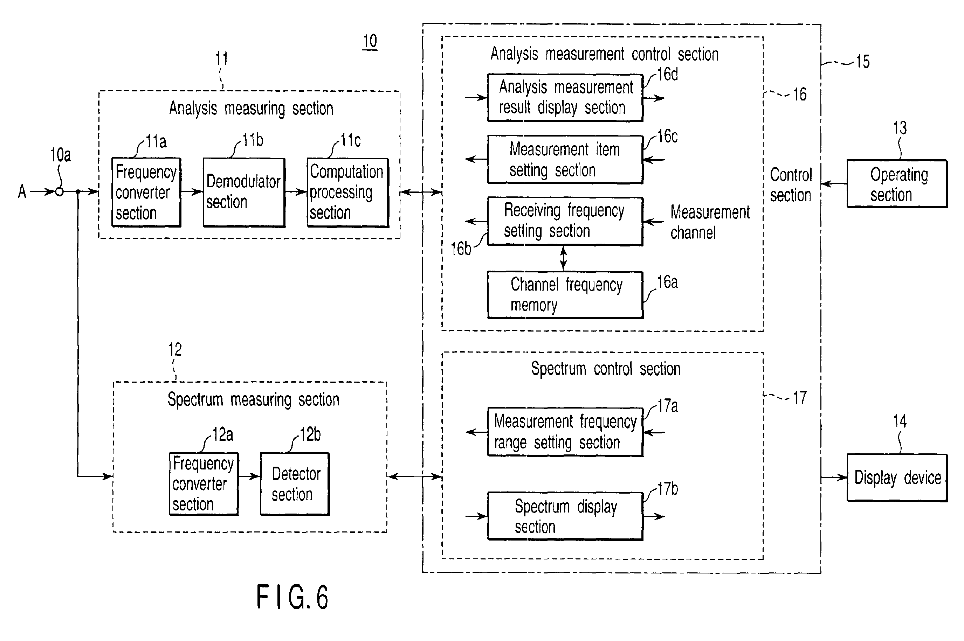

FIG. 6 shows a configuration of a digital broadcasting signal analyzing apparatus 10 having a spectrum measuring function according to a conventional technique.

This digital broadcasting signal analyzing apparatus 10 has: an analysis measuring section 11 that receives a digital broadcasting signal A input to an input terminal 10a, receives and demodulates a digital broadcasting signal of a desired channel, and then, makes measurement of BER, MER and the like for analyzing the quality of that channel; and a spectrum measuring section 12 that receives the digital broadcasting signal A input to the input terminal 10a and makes spectrum measurement including a frequency band of digital broadcasting.

The analysis measuring section 11 has: a frequency converter section 11a that receives a digital broadcasting signal of a measurement target channel specified by a control section 15 described later, and then, converts the received signal into an intermediate frequency band; a demodulator section 11b that converts the signal converted into the intermediate frequency band into a digital signal and demodulates the converted digital signal; and a computing processing section 11c that carries out a computing processing operation of BER, MER and the like with respect to the demodulated signal.

Although a detailed configuration of the computing processing section 11c is not shown, for example, an MER measuring processing operation, as disclosed in patent document 1 described previously, is achieved by: carrying out a hierarchical sorting processing operation with respect to a subcarrier included in a signal obtained in a quadrature demodulation processing operation relevant to an input signal; carrying out demodulation in a demodulation system that corresponds to a data modulation system of the subcarrier in each hierarchy; and calculating an error between a theoretical constellation on a quadrature coordinate system and an actual constellation position as a modulation error ratio.

The spectrum measuring section 12 has: a frequency converter section 12a that converts each signal component into an intermediate frequency band while sweeping a measurement frequency range specified by the control section 15 described later; and a detector section 12b that detects intensity of the signal converted into the intermediate frequency band. From among the signal components included in the input signal A, there is obtained signal intensity of each frequency in the specified measurement frequency range, i.e., spectrum waveform data.

Although parameters specified with respect to the spectrum measuring section 12 include an analytical bandwidth or the like in addition to the measurement frequency range, a description will be given while they are omitted here.

The control section 15 is composed of microcomputers, for example, controls the whole apparatus in accordance with an operation relevant to an operating section 13, and causes a configured display device 14 to display specified parameters, measurement results and the like.

Here, the operating section 13 is composed of a variety of switches, a rotary encoder, touch panel type switches combined with the display device 14 described later, buttons displayed on a screen of the display device 14, mouse cursors and the like.

In addition, the display device 14 is composed of a CRT or a liquid crystal display device.

Now, a description will be given with respect to a case in which frequency converter sections of the analysis measuring section 11 and the spectrum measuring section 12 are independent of each other.

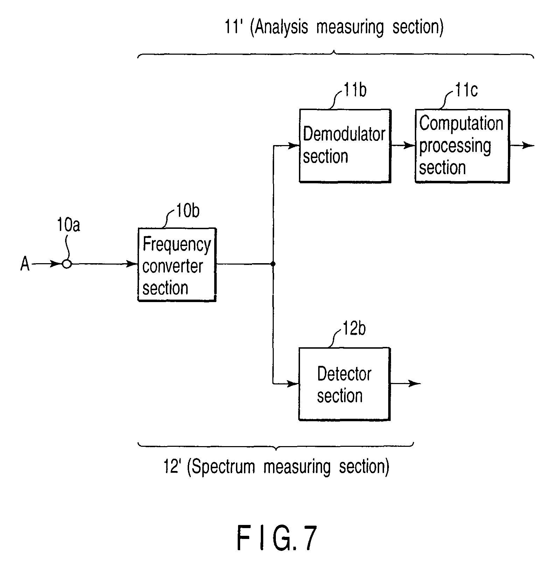

Hence, as shown in FIG. 7, a configuration may be provided such that one frequency converter section 10b is shared by an analysis measuring section 11' and a spectrum measuring section 12'.

However, in the case of this configuration, a locally generated signal for use in the frequency converter section 10b is fixed to a desired frequency at the time of analysis measurement. In contrast, at the time of spectrum measurement, a desired frequency range can be continuously swept.

Therefore, in the case where such one frequency converter section 10b is shared by the analysis measuring section 11' and the spectrum measuring section 12', analysis measurement and spectrum measurement cannot be made at the same time.

The control section 15 has an analysis measurement control section 16 that makes control of the analysis measuring section 11 and a spectrum measurement control section 17 that makes control relevant to the spectrum measuring section 12.

The analysis measurement control section 16 has a channel frequency memory 16a, a receiving frequency setting section 16b, a measurement item setting section 16c, and an analysis/measurement result display section 16d.

The channel frequency memory 16a stores frequency information on each channel of terrestrial digital broadcasting.

The receiving frequency setting section 16b reads out from the channel frequency memory 16a the frequency information that corresponds to a measurement target channel specified by the operating section 13; sets the read out information to a frequency converter section 11a (or common frequency converter section 10b) of the analysis measuring section 11; and causes the converter section to receive a signal of the measurement target channel.

In addition, the measurement item setting section 16c sets information on measurement items specified by the operating section 13 to the demodulator section 11b and the computing processing section 11c, and causes them to carry out a measuring processing operation relevant to the specified measurement items.

The analysis/measurement result display section 16d causes the display device 14 to display the analysis/measurement results obtained by the computing processing section 11c.

On the other hand, the spectrum measurement control section 17 has a measurement frequency range setting section 17a and a spectrum display section 17b. When spectrum measurement is specified by the operating section 13, and then, a measurement frequency range is specified, information on that measurement frequency range is set at the frequency converter section 12a (or common frequency converter section 10b) of the spectrum measuring section 12; data on the spectrum waveform of the measurement frequency range is detected; and the detected spectrum waveform is displayed on the display device 14 together with a quadrature coordinate system made of a horizontal axis frequency and vertical axis power.

In this manner, in the digital broadcasting signal analyzing apparatus 10 having a spectrum measuring function in addition to an analysis measuring function, in the case of making analysis measurement, a measurement target channel and a measurement item are specified by the operating section 13, whereby the display device 14 can display a measurement result relevant to that measurement target channel.

In addition, in the case of making spectrum analysis, a measurement frequency range is specified by the operating section 13, whereby the display device 14 can display the spectrum waveform of that measurement frequency range.

However, in the conventional digital broadcasting signal analyzing apparatus 10 described above, a spectrum measuring function and an analysis measuring function are independent of each other inclusive of their displays. At the time of spectrum measurement, like a general spectrum analyzing device, the spectrum waveform of the specified frequency range is merely displayed on a frequency axis of the display device 14.

Thus, an operator oneself needs to judge at which position on the frequency axis to display the spectrum waveform of a channel targeted for analysis measurement.

Hence, in particular, in the case where the spectrum waveforms of many channels are displayed in parallel on the screen of the display device 14, there is inconvenience that the operator oneself cannot specify the spectrum waveform of the measurement target channel until one checks a channel frequency targeted for analysis referring to other documents and checks that channel frequency on the frequency axis of the display device 14.

It is an object of the present invention to provide an analyzing apparatus and an analyzing method for digital broadcasting signals, capable of improving such difficulties of the conventional digital broadcasting signal analyzing apparatus, enabling an operator to intuitively specify the spectrum waveform of a channel targeted for analysis measurement.

In order to achieve the above-described object, according to a first aspect of the present invention, there is provided a digital broadcasting signal analyzing apparatus, comprising: an analysis measuring section 11 which receives a digital broadcasting signal, and makes quality analysis of the digital broadcasting signal; a spectrum measuring section 12 which receives the digital broadcasting signal, and makes spectrum measurement of a pre-specified measurement frequency range; an operating section 13 which specifies a measurement target channel for making the quality analysis and a measurement frequency range for making the spectrum measurement; a display device 14 which displays a result of the quality analysis and a spectrum waveform in the measurement frequency range; a channel frequency memory 38 having stored in advance frequency information of each channel of the digital broadcasting signal; and a control section 35 which controls the analysis measuring section 11, the spectrum measuring section 12, and the display device 14 based on the channel frequency information stored in the channel frequency memory 38 in response to operation of the operating section 13; characterized in that the control section 35 comprises an identification display section 39 capable of identifying a spectrum waveform displayed on the display device 14 with another spectrum waveform in a frequency range corresponding to the measurement target channel based on the channel frequency information stored in the channel frequency memory 38 when arbitrary one of measurement target channel has been specified by the operating section 13 at the time of the spectrum measurement.

In order to achieve the above-described object, according to a second aspect of the present invention, there is provided the digital broadcasting signal analyzing apparatus according to the first aspect, characterized in that the control section 35 judges whether or not a frequency of a measurement target channel specified by the operating section 13 is within the measurement frequency range specified by the operating section 13 when the spectrum measurement is made; and, when the frequency of the measurement target channel is out of the measurement frequency range specified by the operating section 13, the control section changes a measurement frequency range so that a spectrum waveform of the measurement target channel is displayed on the display device 14.

In order to achieve the above-described object, according to a third aspect of the present invention, there is provided the digital broadcasting signal analyzing apparatus according to the first aspect, characterized in that the control section 35 changes a frequency measurement range so that a display position of a spectrum waveform of a measurement target channel before changed and a display position of a spectrum waveform of a measurement target channel after changed are identical to each other when a measurement target channel specified by the operating section 13 has been changed at the time of the spectrum measurement.

In order to achieve the above-described object, according to a fourth aspect of the present invention, there is provided the digital broadcasting signal analyzing apparatus according to the first aspect, characterized in that the identification display section 39 displays a spectrum waveform of the measurement target channel on the display device 14 by means of a zone marker M identifiably from a spectrum waveform of another channel.

In order to achieve the above-described object, according to a fifth aspect of the present invention, there is provided the digital broadcasting signal analyzing apparatus according to the first aspect, characterized in that the identification display section 39 identifiably displays a spectrum waveform of the measurement target channel and a spectrum waveform of another channel using different colors or different brightness.

In order to achieve the above-described object, according to a sixth aspect of the present invention, there is provided the digital broadcasting signal analyzing apparatus according to any one of the first to fifth aspects, characterized in that, when the analysis measurement and the measurement target channel have been specified by operation of the operating section 13, a current measurement target channel is displayed on the display device 14 and channel change buttons 13a, 13b for change of the measurement target channel displayed on the display device 14 are displayed as part of the operating section 13.

In order to achieve the above-described object, according to a seventh aspect of the present invention, there is provided the digital broadcasting signal analyzing apparatus according to the sixth aspect in the case of following the fourth aspect, characterized in that the control section 35 moves a display position of the zone marker M in response to an operation of changing the measurement target channel by the channel change buttons 13a, 13b.

In order to achieve the above-described object, according to an eighth aspect of the present invention, there is provided the digital broadcasting signal analyzing apparatus according to the sixth aspect in the case of following the fifth aspect, characterized in that the control section 35 moves a display position of the different colors or different brightness in response to an operation of changing the measurement target channel by the channel change buttons 13a, 13b.

In order to achieve the above-described object, according to a ninth aspect of the present invention, there is provided the digital broadcasting signal analyzing apparatus according to any one of the first to eighth aspects, characterized in that the analysis measuring section 11 has: a frequency converter section 11a which receives a digital broadcasting signal of the measurement target channel specified by the operating section 13 via the control section 35, and then, converts the received signal to an intermediate frequency band; a demodulator section 11b which converts the signal converted to the intermediate frequency band by means of the frequency converter section 11a into a digital signal, and then, demodulates the converted digital signal; and a computation processing section 11c which carries out computation processing for predetermined analysis measurement relevant to the digital broadcast signal in response to the signal demodulated by the demodulator section 11b, and the spectrum measuring section 12 has: a frequency converter section 12a which converts respective signal components into an intermediate frequency band while sweeping the measurement frequency range specified by the operating section 13 via the control section 35; and a detector section 12b which detects intensity of the signal converted into the intermediate frequency band by means of the frequency converter section 12a.

In order to achieve the above-described object, according to a tenth aspect of the present invention, there is provided the digital broadcasting signal analyzing apparatus according to the ninth aspect, characterized in that the frequency converter section 11a of the analysis measuring section 11 and the frequency converter section 12a of the spectrum measuring section 12 are provided as a common frequency converter section 10b, and the control section 35 has a single display mode in which analysis measurement of a digital broadcasting signal of the measurement target channel by the analysis measuring section 11 and spectrum measurement of the measurement frequency range by the spectrum measuring section 12 are separately made; and a measurement result of the analysis measurement by the analysis measuring section 11 and a spectrum waveform obtained by the spectrum measurement by the spectrum measuring section 12 are separately displayed on the display device 14.

In order to achieve the above-described object, according to an eleventh aspect of the present invention, there is provided the digital broadcasting signal analyzing apparatus according to the ninth aspect, characterized in that the control section 35 has at least one of: a single display mode in which analysis measurement of a digital broadcasting signal of the measurement target channel by the analysis measuring section 11 and spectrum measurement of the measurement frequency range by the spectrum measuring section 12 are separately made in response to specification by the operating section 13, and a measurement result of the analysis measurement by the analysis measuring section 11 and a spectrum waveform obtained by the spectrum measurement by the spectrum measuring section 12 are separately displayed on the display device 14; and a simultaneous display mode in which the analysis measurement of a digital broadcasting signal of the measurement target channel by the analysis measuring section 11 and the spectrum measurement of the measurement frequency range by the spectrum measuring section 12 are made at the same time in response to specification by the operating section 13, and the measurement result of the analysis measurement by the analysis measuring section 11 and the spectrum waveform obtained by the spectrum measurement by the spectrum measuring section 12 are displayed on the display device 14 at the same time.

In order to achieve the above-described object, according to a twelfth aspect of the present invention, there is provided the digital broadcasting signal analyzing apparatus according to the eleventh aspect in the case of following the seventh aspect, characterized in that the control section 35, at the time of the simultaneous display mode, changes a current measurement target channel displayed on the display device 14 in response to an operation of changing the measurement target channel by the channel change buttons 13a, 13b, and moves a display position of the zone marker M and updates and displays a measurement result of the analysis measurement to a measurement result relevant to the changed measurement target channel.

In order to achieve the above-described object, according to a thirteenth aspect of the present invention, there is provided the digital broadcasting signal analyzing apparatus according to the first aspect in the case of following the eighth aspect, characterized in that the control section 35, at the time of the simultaneous display mode, changes a current measurement target channel displayed on the display device 14 in response to an operation of changing the measurement target channel by the channel change buttons 13a, 13b, and moves a display position of the different colors or different brightness and updates and displays a measurement result of the analysis measurement to a measurement result relevant to the changed measurement target channel.

In order to achieve the above-described object, according to a fourteenth aspect of the present invention, there is provided the digital broadcasting signal analyzing apparatus according to the seventh aspect, characterized in that the measurement target channel is changed in response to an operation of changing the measurement target channel by the channel change buttons 13a, 13b, and a result of the analysis measurement in the changed measurement target channel is displayed together with a center frequency of the channel.

In order to achieve the above-described object, according to a fifteenth aspect of the present invention, there is provided the digital broadcasting signal analyzing apparatus according to the ninth or tenth aspect, characterized in that the control section 35 has: an analysis measurement control section 36 which makes control of the analysis measuring section 11; a spectrum measurement control section 37 which makes control relevant to the spectrum measuring section 12; and a channel frequency memory 38 having stored frequency information of each channel of the digital broadcasting; an operation of specifying a measurement target channel by the operating section 13 is made valid by analysis measurement by the analysis measuring section 11 and spectrum measurement by the spectrum measuring section 12; and the channel frequency memory 38 can be shared by the analysis measurement control section 36 and the spectrum measurement control section 37.

In order to achieve the above-described object, according to a sixteenth aspect of the present invention, there is provided the digital broadcasting signal analyzing apparatus according to the fifteenth aspect, characterized in that the analysis measurement control section 36 has a receiving frequency setting section 16b, a measurement item setting section 16c, and an analysis measurement result display section 16d; when analysis measurement relevant to the digital broadcasting signal is specified by the operating section 13 and a measurement target channel and a measurement item are specified, the receiving frequency setting section 16b reads out from the channel frequency memory 38 frequency information corresponding to the measurement target channel specified by the operating section 13, sets the read out information to the frequency converter section 11a of the analysis measuring section 11 or the common frequency converter section 10b to receive the signal of the measurement target channel; the measurement item setting section 16c sets information of the measurement item specified by the operating section 13 to the demodulator section 11b and the computation processing section 11c, and then, causes a measuring process relevant to the specified measurement item to be made; and the analysis measurement result display section 16d causes the display device 14 to display the analysis measurement result obtained by the computation processing section 11c.

In order to achieve the above-described object, according to a seventeenth aspect of the present invention, there is provided the digital broadcasting signal analyzing apparatus according to the fifteenth aspect, characterized in that the spectrum measurement control section 37 has a measurement frequency range setting section 17a, a spectrum display section 17b, and the identification display section 39; the measurement frequency range setting section 17a, at the time of spectrum measurement, detects data of a spectrum waveform in a measurement frequency range specified by setting to the spectrum measuring section 12 information corresponding to the measurement frequency range specified by the operating section 13; the spectrum display section 17b causes the display device 14 to display a spectrum waveform detected bv the spectrum measuring section 12 together with a quadrature coordinate of a horizontal axis frequency and vertical axis power; and the identification display section 39 reads out from the channel frequency memory 38 frequency information corresponding to a measurement target channel specified by operation of the operating section 13, and then, identifiably displays on a screen of the display device 14 a spectrum waveform of the measurement target channel and a spectrum waveform of another channel.

In order to achieve the above-described object, according to an eighteenth aspect of the present invention, there is provided the digital broadcasting signal analyzing apparatus according to the sixth aspect, characterized in that the channel change buttons 13a, 13b for changing the measurement target channel can change to a measurement target channel of a channel immediately beneath or a channel immediately above the channel every one operation.

In order to achieve the above-described object, according to a nineteenth aspect of the present invention, there is provided the digital broadcasting signal analyzing apparatus according to the sixth aspect in the case of following the fourth aspect, characterized in that a zone marker center position button 13d to move the zone marker M displayed on the display device 14 to a center position is displayed as part of the operating section 13 on the display device 14; and the control section 35, when the zone marker center position button 13d has been operated, displays an odd-numbered measurement target channel on the display device 14, thereby moving to and displaying on a center position together with the zone marker M the odd-numbered measurement target channel specified by operation of the operating section 13.

In order to achieve the above-described object, according to a twentieth aspect of the present invention, there is provided the digital broadcasting signal analyzing apparatus according to the eighteenth or nineteenth aspect, characterized in that a mouse cursor 13c to operate the channel change buttons 13a, 13b for change of the measurement target channel or the zone marker center position button 13d is displayed on the display device 14 as part of the operating section 13.

In order to achieve the above-described object, according to a twenty-first aspect of the present invention, there is provided the digital broadcasting signal analyzing apparatus according to any one of the first to twentieth aspects, characterized in that the digital broadcasting signal includes a terrestrial digital broadcasting signal.

In order to achieve the above-described object, according to a twenty-second aspect of the present invention, there is provided a digital broadcasting signal analyzing method comprising the steps of: receiving a digital broadcasting signal, and making quality analysis of the digital broadcasting signal by an analysis setting section 11; receiving the digital broadcasting signal, and making spectrum measurement of a pre-specified measurement frequency range by a spectrum measuring section 12; specifying a measurement target channel for making the quality analysis and a measurement frequency range for making the spectrum measurement by an operating section 13; displaying a result of the quality analysis and a spectrum waveform in the measurement frequency range by a display device 14; storing in advance frequency information of each channel of the digital broadcasting signal by a channel frequency memory 38; and controlling the analysis measuring section 11, the spectrum measuring section 12, and the display device 14, based on the channel frequency information stored in the channel frequency memory 38 in response to an operation of the operating section 13 by a control section 35, characterized in that the digital broadcasting signal analyzing method further comprises the step of, at the time of the spectrum measurement, when arbitrary one of measurement target channel has been specified by the operating section 13, identifying a spectrum waveform displayed on the display device 14 in a frequency range corresponding to the measurement target channel from another spectrum waveform, based on the channel frequency information stored in the channel frequency memory 38 by means of an identification display section 39.

In order to achieve the above-described object, according to a twenty-third aspect of the present invention, there is provided the digital broadcasting signal analyzing method according to the twenty-second aspect, characterized in that the digital broadcasting signal includes a terrestrial digital broadcasting signal.

According to the digital broadcasting signal analyzing apparatus and method of the present invention described above, an operation of specifying a measurement target channel using an operating section is provided so as to be made effective at the time of spectrum measurement as well as analysis measurement, and a spectrum waveform of the measurement target channel is displayed to be distinguished from a spectrum waveform of another channel on a screen of a display device, based on the measurement target channel specified at the time of spectrum measurement and information of a channel frequency memory.

Thus, an operator can specify a spectrum waveform of a measurement target channel intuitively on the screen of the display device at the time of spectrum measurement.

The invention can be more fully understood from the following detailed description when taken in conjunction with the accompanying drawings, in which:
FIG. 1 is a block diagram depicting a whole configuration of one embodiment to which an analyzing apparatus and an analyzing method for a digital broadcasting signal according to the present invention are applied;
FIG. 2 is a view showing an example of display at the time of analysis measurement according to the embodiment of FIG. 1;
FIG. 3 is a view showing an example of display at the time of spectrum measurement according to the embodiment of FIG. 1;
FIG. 4 is a view showing an example of display when a measurement target channel has been changed at the time of spectrum measurement according to the embodiment of FIG. 1;
FIG. 5 is a view showing an example in which measurement results of analysis measurement and spectrum measurement according to the embodiment of FIG. 1 are displayed at the same time;
FIG. 6 is a block diagram depicting a configuration of a digital broadcasting signal analyzing apparatus according to a conventional technique;
FIG. 7 is a view showing an exemplary configuration in which a frequency converter section is shared by an analysis measuring section and a spectrum measuring section shown in FIG. 6;
FIG. 8 is a view showing another example of display at the time of spectrum measurement according to the embodiment shown in FIG. 1; and
FIG. 9 is a view showing an example when a measurement target channel and a zone marker M are displayed at a center position at the time of spectrum measurement.

Hereinafter, a description will be given with respect to one embodiment to which an analyzing apparatus and an analyzing method for a digital broadcasting signal according to the present invention is to be applied with reference to the accompanying drawings;

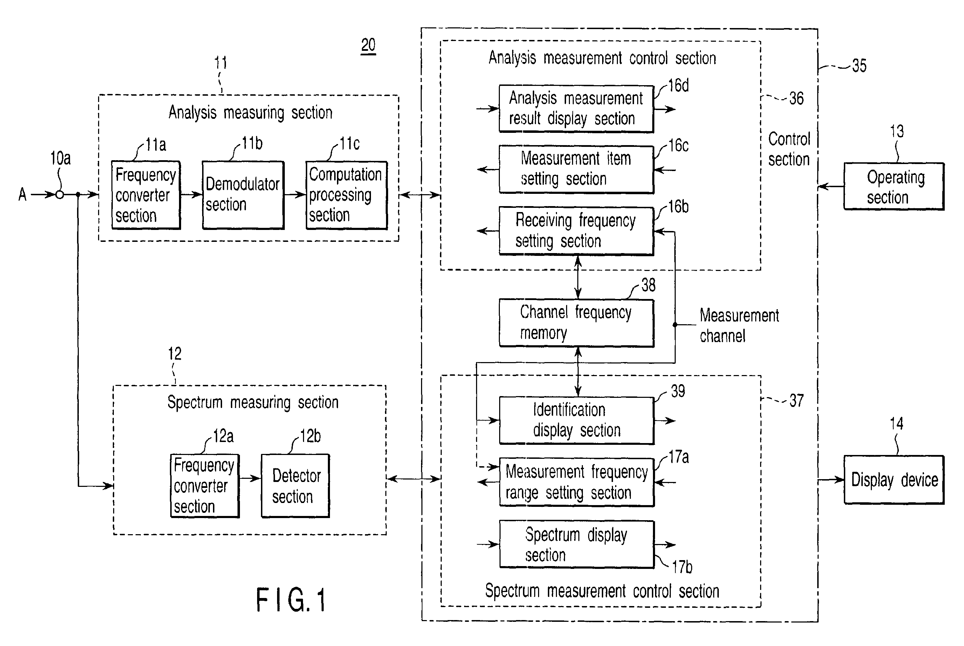

FIG. 1 shows a configuration of a digital broadcasting signal analyzing apparatus 20 according to one embodiment in which an analyzing apparatus and an analyzing method for a digital broadcasting signal according to the present invention are applied.

The digital broadcasting signal analyzing apparatus according to the present invention basically has: an analysis measuring section 11 for receiving a digital broadcasting signal, and making quality analysis of the digital broadcasting signal; a spectrum measuring section 12 for receiving the digital broadcasting signal, and making spectrum measurement in a previously specified range of a measurement frequency; an operating section 13 for specifying a measurement target channel for making the quality analysis and a measurement frequency range for making the spectrum measurement; a display device 14 for displaying a result of the quality measurement and a spectrum waveform in the measurement frequency range; a channel frequency memory 38 having stored in advance frequency information on each channel of the digital broadcasting signal; and a control section 35 for controlling the analysis measuring section 11, the spectrum measuring section 12, and the display device 14, based on channel frequency information stored in the channel frequency memory 38 in response to an operation of the operating section 13. The control section 35 is featured by having an identification display section 39 capable of, at the time of the spectrum measurement, identifying a spectrum waveform and another spectrum waveform displayed in the display section 14 in a frequency range corresponding to the measurement target channel, based on the channel frequency information stored in the channel frequency memory 38 when an arbitrary one of measurement target channel has been specified by means of the operating section 13.

In addition, the digital broadcasting signal analyzing method according to the present invention basically has: the step of receiving a digital broadcasting signal, and making quality analysis of the digital broadcasting signal by means of an analysis measuring section 11; the step of receiving the digital broadcasting signal, and making spectrum measurement in a pre-specified measurement frequency range, by means of a spectrum measuring section 12; the step of specifying a measurement target channel for making the quality analysis and a measurement frequency range for making the spectrum measurement by means of an operating section 13; the step of displaying a result of the quality analysis and a spectrum waveform in the measurement frequency range by means of a display device 14; the step of storing in advance frequency information of each channel of the digital broadcasting signal by means of a channel frequency memory 38; and the step of controlling the analysis measuring section 11, the spectrum measuring section 12, and the display device 14 based on the channel frequency information stored in the channel frequency memory 38 in response to an operation of the operating section 13, and further has the step of, at the time of the spectrum measurement, when arbitrary one of measurement target channel has been specified by means of the operating section 13, identifying a spectrum waveform displayed on the display section 14 in a frequency range corresponding to the measurement target channel and another spectrum.

Specifically, this digital broadcasting analyzing apparatus 20, for example, is equipped with the analysis measuring section 11, the spectrum measuring section 12, the operating section 13, and the display device 14 as analyzing apparatuses having a spectrum measuring function for a terrestrial digital broadcasting signal.

Hence, these analysis measuring section 11, spectrum measuring section 12, operating section 13, and display device 14 are equivalent to constituent elements of the conventional digital broadcasting signal analyzing apparatus 10 shown in FIG. 6. Thus, these constituent elements are designated by like reference numerals in FIG. 6, and the description of these constituent elements are omitted here.

In addition, as shown in FIG. 7, a configuration in which a common frequency converter section 10b is used by the analysis measuring section 11 and the spectrum measuring section 12 is also included in the technical scope of the present invention.

The control section 35 of this digital broadcasting signal analyzing apparatus 20 has an analysis measurement control section 36 and a spectrum measurement control section 37 like the conventional digital broadcasting signal analyzing apparatus 10 described previously.

Hence, the control section 35 of this digital broadcasting analyzing apparatus 20 is configured so that an operation of specifying a measurement target channel using the operating section 13 is valid at the time of spectrum measurement as well as at the time of analysis measurement. In addition, like the above-described channel frequency memory 16a, the channel frequency memory 38, which has stored frequency information on each channel of the digital broadcasting signal, is shared by the analysis measurement control section 36 and the spectrum measurement control section 37.

That is, in the same manner as described previously, when analysis measurement relevant to a digital broadcast signal, a measurement target channel, and measurement items are specified by the operating section 13, the analysis measurement control section 36 reads out from the channel frequency memory 38 frequency information of the measurement target channel specified by the receiving frequency setting section 16b, the read out information is set at the analysis measuring section 11, and a digital broadcasting signal of the measurement target channel is received and demodulated. In addition, information of measurement items specified by a measurement item setting section 16c is set at the analysis measuring section 11 for measurement of the specified measurement items (BER, MER, constellation or the like), and a measurement result of the analysis measuring section 11 is displayed on the display device 14 by means of an analysis measurement result display section 16d.

In addition, the spectrum measurement control section 37, like the spectrum measurement control section 17, has a measurement frequency range setting section 17a for setting to the spectrum measuring section 12 the information that corresponds to the measurement frequency range specified by the operating section 13 at the time of spectrum measurement, and then, detecting data of a spectrum waveform in the specified measurement frequency range; and a spectrum display section 17b that causes the display device 14 to display the detected spectrum waveform together with a quadrature coordinate system of the horizontal axis frequency and the vertical axis power.

However, at this spectrum measurement control section 37, there is provided an identification display section 39 for reading out from the channel frequency memory 38 the frequency information corresponding to the measurement target channel specified by an operation of the operating section 13, and displaying identifiably on a screen of the display device 14 a spectrum waveform of that measurement target channel and a spectrum waveform of another channel.

This identification display section 39 identifiably displays a spectrum waveform of the measurement target channel and a spectrum waveform of another channel on the screen of the display device 14 in a mode of displaying the range of the spectrum waveform that corresponds to the measurement target channel by a zone marker and in a mode of identifiably displaying the spectrum waveform of the measurement target channel with a different color and brightness from that of the spectrum waveform of another channel.

Now, a description will be given with respect to a case in which the identification display section 39 identifiably displays the spectrum waveform of the measurement target channel and the spectrum waveform of another channel on the screen of the display device 14 by a zone marker M.

First, assume that analysis measurement has been specified by operation of the operating section 13, and MER measurement has been specified as a measurement item.

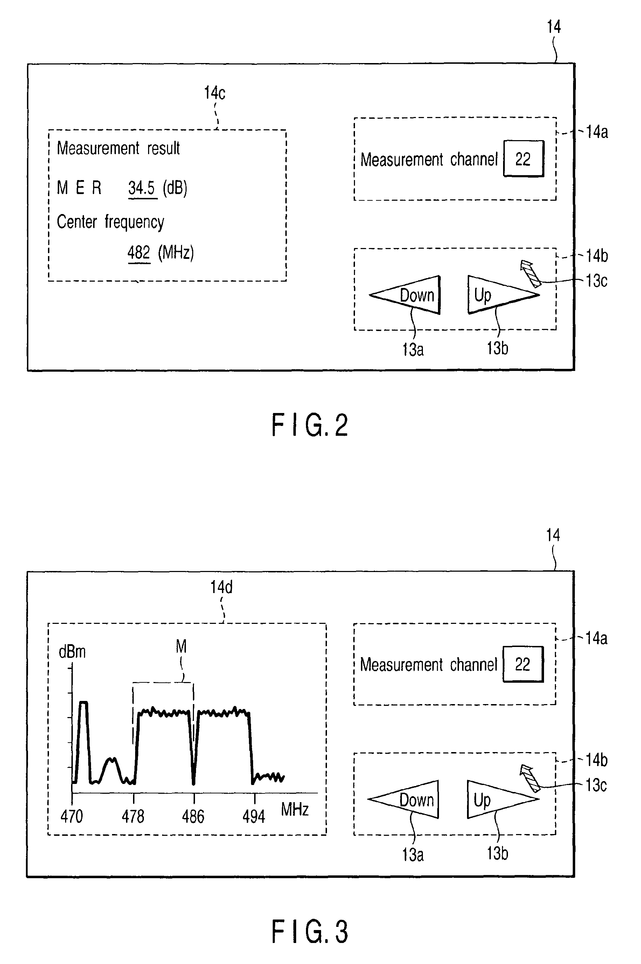

In this case, as shown in FIG. 2, a measurement target channel display section 14a for displaying a current measurement target channel (channel 22 in this example) is displayed on the upper right side of the display 14.

In addition, channel change buttons 13a (Down display), 13b (Up display), and a channel change button display section 14b displayed as part of the operating section 13 by a mouse cursor 13c for that button operation are displayed at the lower right side of the display section 14.

In addition, a measurement result display section 14c for displaying a result of MER measurement in the measurement target channel and a center frequency of a channel in this case is displayed at the left side of the screen of the display device 14.

Here, for example, if the measuring person presses the channel change button 13a once by operation of the mouse cursor 13c in the channel change button display section 14b in the lower right side of the screen of the display device 14, a measurement target channel is changed to a channel immediately beneath a current measurement target channel (channel 21 in this example), and then, the changed channel is displayed at the measurement target channel display section 14a at the upper right side of the screen of the display device 14.

In addition, if an operator presses the channel change button 13b once by operation of the mouse cursor 13c in the channel change button display section 14b at the lower right side of the screen of the display device 14, the measurement target channel is changed to a channel immediately above a current target channel (channel 23 in this example), and then, the changed channel is displayed on the measurement target channel display section 14a at the upper right side of the screen of the display device 14.

Then, the results of MER measurement in these changed measurement target channels are displayed on the measurement result display section 14c at the left side of the screen of the display device 14 together with a center frequency of the channel.

Next, assume that current measurement has been switched to a spectrum measurement by operation of the operating section 13, and then, a measurement frequency range has been specified.

In this case, as shown in FIG. 3, the measurement target channel display section 14a for displaying the current measurement target channel (channel 22 in this example) is displayed on the upper right side of the screen of the display device 14 in the same manner as described previously.

In addition, the channel change button display section 14b for the channel change buttons 13a (Down display) and 13b (Up display) and the mouse cursor 13c for that button operation to be displayed as part of the operating section 13 is displayed at the lower right side of the display device 14.

In addition, a spectrum waveform display section 14d for displaying a spectrum waveform of a specified measurement frequency range is displayed at the left side of the screen of the display device 14.

In this case, from among the spectrum waveforms displayed on the spectrum waveform display section 14d, a zone marker M is displayed at a position of a spectrum waveform of a current measurement target channel (channel 22 in this example).

Therefore, an operator can intuitively recognize that a spectrum waveform at a position of this zone marker M is a spectrum waveform of a digital broadcasting signal of a measurement target channel.

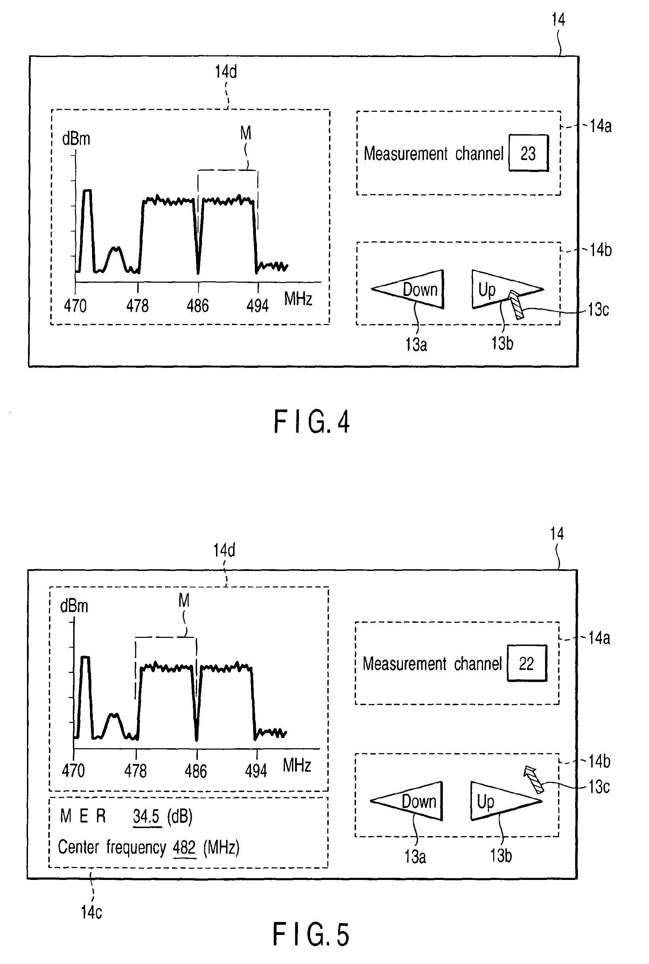

Here, if an operator presses the channel change button 13b once by operation of the mouse cursor 13c in the channel change button display section 14b at the lower right side of the screen of the display device 14, a measurement target channel is changed to a channel immediately above a current measurement target channel (channel 23 in this example) as shown in FIG. 4, and then, is displayed on the measurement target channel display section 14a at the upper right side of the screen of the display device 14. In addition, the zone marker M displayed on the spectrum waveform display section 14a at the left side of the screen of the display device 14 moves to a position of a channel immediately above the current target channel.

In addition, if an operator presses the channel change button 13a once by operation of the mouse cursor 13c in the channel change button display section 14b at the lower right of the screen of the display device 14, a measurement target channel is changed to a channel immediately beneath a current measurement target channel (channel 21 in this example), and then, is displayed on the measurement target channel display section 14a at the upper right side of the screen of the display device 14. In addition, a marker M displayed on the spectrum waveform display section 14d on the left side of the screen of the display device 14 moves to a position of a channel immediately beneath the current measurement target channel.

In this manner, even in the case where an operator has changed a measurement target channel, it is possible to precisely grasp a spectrum waveform of that channel.

In addition, if the state of FIG. 4 is changed to analysis measurement, a current screen is changed to that shown in FIG. 2, and an analysis measurement result relevant to channel 23 is displayed.

In this manner, in the digital broadcasting signal analyzing apparatus 20 of the present embodiment, even at the time of spectrum measurement, it is possible to specify a channel targeted for analysis measurement. In addition, a spectrum waveform of that specified measurement target channel is identifiably displayed from a spectrum waveform of another channel by means of a zone marker M or the like, so that an operator can intuitively identify a measurement target channel from a spectrum waveform of another channel.

In this manner, an operator can easily specify a spectrum waveform of the measurement target channel even in the case where spectrum waveforms of a number of channels are displayed in parallel on the screen of the display device 14.

The above description has been given with respect to a case of a single display mode for displaying either one of a measurement result and a spectrum waveform of analysis measurement on the screen of the display device 14.

Hence, as described previously, in the case where the analysis measuring section 11 and the spectrum measuring section 12 are independent of each other including a frequency converter section, a spectrum measuring process and an analysis measuring process are carried out in parallel at the same time, and a simultaneous display mode for displaying measurement results of both of them on the same screen of the display device 14 can be established, as shown in FIG. 5, for example.

In this case, a display mode may be configured so that the single display mode and the simultaneous display mode can be arbitrarily specified by operation of the operating section 13.

In the case of this simultaneous display mode, if a measurement target channel is changed by operations of the channel change buttons 13a and 13b, a marker M in a spectrum display area moves to a position of the changed measurement target channel and a measurement result of analysis measurement is also displayed to be updated to a measurement result relevant to that changed measurement target channel.

In the case where a frequency of the measurement target channel specified by the operating section 13 exceeds a measurement frequency range specified at the time of spectrum measurement, a marker M may disappear from the screen of the display device 14.

Hence, in the case where this becomes problematic, as indicated by the dashed line in FIG. 1, a configuration is provided such that the measurement frequency range setting section 17a of the spectrum measurement control section 37 monitors frequency information of a measurement target channel, whereby, when a measurement target channel of a frequency exceeding a measurement frequency range of a spectrum has been specified, a measurement frequency range to be set at the spectrum measuring section 12 is automatically changed (shifted), and then, the frequency of the measurement target channel is controlled to be always included in the measurement frequency range.

In addition, at the time of making spectrum measurement, when a measurement target channel specified by means of the operating section 13 has been changed, in the same manner as described above, the measurement frequency range setting section 17a of the spectrum measurement control section 37 monitors frequency information of a measurement target channel, whereby a configuration may be provided so as to change a measurement frequency range set at the spectrum measuring section 12 so that a display position of a spectrum waveform of a measurement target channel before changed and a display position of a spectrum waveform of a measurement target channel after changed are identical to each other.

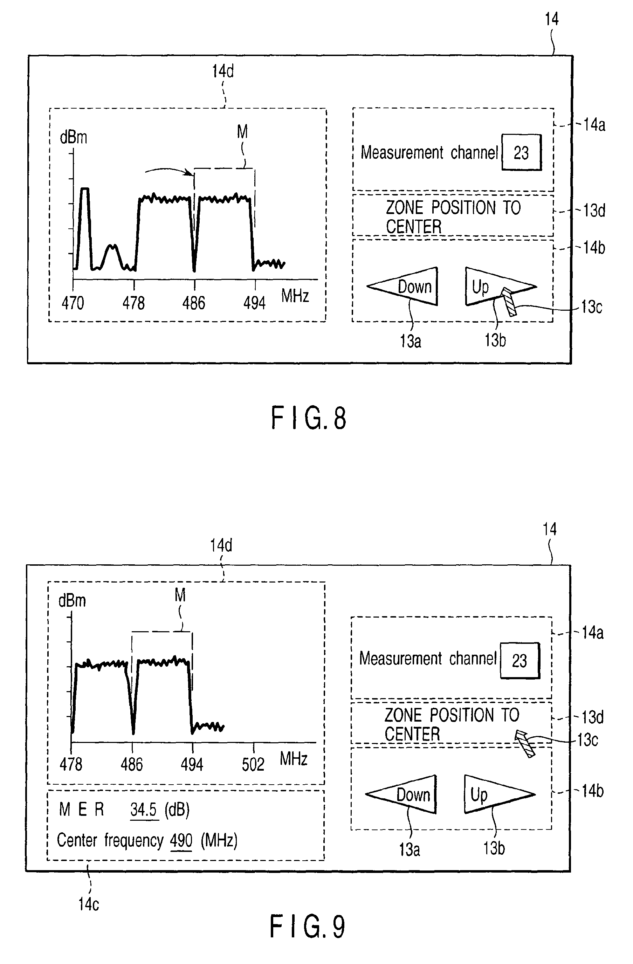

In addition, at the time of making spectrum measurement, as shown in FIG. 8, a zone marker center position button 13d as part of the operating section 13 on the display device 14 for moving a zone marker M displayed on the display section 14 to a center position may be configured so as to be further displayed between the measurement target channel display section 14a and the channel change button display section 14b at the right side of the screen described previously.

In this case, as shown in FIG. 9, when the zone marker center position button 13d has been operated by operation of the mouse cursor 13c, an odd-numbered measurement target channel is displayed on the display device 14, whereby the control section 35 is configured so as to move and display the odd-numbered measurement target channel specified by the operation of the operation section 13 to a center position together with a zone marker M.

Therefore, according to the present invention as described above, at the time of spectrum measurement, there can be provided an analyzing apparatus and an analyzing method for digital broadcasting signals, in which an operator can intuitively specify a spectrum waveform of a channel targeted for analysis measurement.

## Claims

1. A digital broadcasting signal analyzing apparatus, comprising:
an analysis measuring section (11) which receives a digital broadcasting signal, and makes quality analysis of the digital broadcasting signal;
a spectrum measuring section (12) which receives the digital broadcasting signal, and makes spectrum measurement of a pre-specified measurement frequency range;
an operating section (13) which specifies a measurement target channel for making the quality analysis and a measurement frequency range for making the spectrum measurement;
a display device (14) which displays a result of the quality analysis and a spectrum waveform in the measurement frequency range;
a channel frequency memory (38) having stored in advance frequency information of each channel of the digital broadcasting signal; and
a control section (35) which controls the analysis measuring section (11), the spectrum measuring section (12), and the display device (14) based on the channel frequency information stored in the channel frequency memory (38) in response to operation of the operating section (13);
**characterized in that** the control section (35) comprises an identification display section (39) capable of identifying a spectrum waveform displayed on the display device (14) with another spectrum waveform in a frequency range corresponding to the measurement target channel based on the channel frequency information stored in the channel frequency memory (38) when arbitrary one of measurement target channel has been specified by the operating section (13) at the time of the spectrum measurement.

2. The digital broadcasting signal analyzing apparatus according to claim 1, **characterized in that** the control section (35) judges whether or not a frequency of a measurement target channel specified by the operating section (13) is within the measurement frequency range specified by the operating section (13) when the spectrum measurement is made; and, when the frequency of the measurement target channel is out of the measurement frequency range specified by the operating section (13), the control section changes a measurement frequency range so that a spectrum waveform of the measurement target channel is displayed on the display device (14).

3. The digital broadcasting signal analyzing apparatus according to claim 1, **characterized in that** the control section (35) changes a frequency measurement range so that a display position of a spectrum waveform of a measurement target channel before changed and a display position of a spectrum waveform of a measurement target channel after changed are identical to each other when a measurement target channel specified by the operating section (13) has been changed at the time of the spectrum measurement.

4. The digital broadcasting signal analyzing apparatus according to claim 1, **characterized in that** the identification display section (39) displays a spectrum waveform of the measurement target channel on the display device (14) by means of a zone marker (M) identifiably from a spectrum waveform of another channel.

5. The digital broadcasting signal analyzing apparatus according to claim 1, **characterized in that** the identification display section (39) identifiably displays a spectrum waveform of the measurement target channel and a spectrum waveform of another channel using different colors or different brightness.

6. The digital broadcasting signal analyzing apparatus according to any one of claims 1 to 5, **characterized in that**, when the analysis measurement and the measurement target channel have been specified by operation of the operating section (13), a current measurement target channel is displayed on the display device (14) and channel change buttons (13a, 13b) for change of the measurement target channel displayed on the display device (14) are displayed as part of the operating section (13).

7. The digital broadcasting signal analyzing apparatus according to claim 6 in the case of following claim 4, **characterized in that** the control section (35) moves a display position of the zone marker (M) in response to an operation of changing the measurement target channel by the channel change buttons (13a, 13b).

8. The digital broadcasting signal analyzing apparatus according to claim 6 in the case of following claim 5, **characterized in that** the control section (35) moves a display position of the different colors or different brightness in response to an operation of changing the measurement target channel by the channel change buttons (13a, 13b).

9. The digital broadcasting signal analyzing apparatus according to any one of claims 1 to 8, **characterized in that** the analysis measuring section (11) has: a frequency converter section (11a) which receives a digital broadcasting signal of the measurement target channel specified by the operating section (13) via the control section (35), and then, converts the received signal to an intermediate frequency band; a demodulator section (11b) which converts the signal converted to the intermediate frequency band by means of the frequency converter section (11a) into a digital signal, and then, demodulates the converted digital signal; and a computation processing section (11c) which carries out computation processing for predetermined analysis measurement relevant to the digital broadcast signal in response to the signal demodulated by the demodulator section (11b), and the spectrum measuring section (12) has: a frequency converter section (12a) which converts respective signal components into an intermediate frequency band while sweeping the measurement frequency range specified by the operating section (13) via the control section (35); and a detector section (12b) which detects intensity of the signal converted into the intermediate frequency band by means of the frequency converter section (12a).

10. The digital broadcasting signal analyzing apparatus according to claim 9, **characterized in that** the frequency converter section (11a) of the analysis measuring section (11) and the frequency converter section (12a) of the spectrum measuring section (12) are provided as a common frequency converter section (10b), and
the control section (35) has a single display mode in which analysis measurement of a digital broadcasting signal of the measurement target channel by the analysis measuring section (11) and spectrum measurement of the measurement frequency range by the spectrum measuring section (12) are separately made; and a measurement result of the analysis measurement by the analysis measuring section (11) and a spectrum waveform obtained by the spectrum measurement by the spectrum measuring section (12) are separately displayed on the display device (14).

11. The digital broadcasting signal analyzing apparatus according to claim 9, **characterized in that** the control section (35) has at least one of:
a single display mode in which analysis measurement of a digital broadcasting signal of the measurement target channel by the analysis measuring section (11) and spectrum measurement of the measurement frequency range by the spectrum measuring section (12) are separately made in response to specification by the operating section (13), and a measurement result of the analysis measurement by the analysis measuring section (11) and a spectrum waveform obtained by the spectrum measurement by the spectrum measuring section (12) are separately displayed on the display device (14); and
a simultaneous display mode in which the analysis measurement of a digital broadcasting signal of the measurement target channel by the analysis measuring section (11) and the spectrum measurement of the measurement frequency range by the spectrum measuring section (12) are made at the same time in response to specification by the operating section (13), and the measurement result of the analysis measurement by the analysis measuring section (11) and the spectrum waveform obtained by the spectrum measurement by the spectrum measuring section (12) are displayed on the display device (14) at the same time.

12. The digital broadcasting signal analyzing apparatus according to claim 11 in the case of following claim 7, **characterized in that** the control section (35), at the time of the simultaneous display mode, changes a current measurement target channel displayed on the display device (14) in response to an operation of changing the measurement target channel by the channel change buttons (13a, 13b), and moves a display position of the zone marker (M) and updates and displays a measurement result of the analysis measurement to a measurement result relevant to the changed measurement target channel.

13. The digital broadcasting signal analyzing apparatus according to claim 1 in the case of following claim 8, **characterized in that** the control section (35), at the time of the simultaneous display mode, changes a current measurement target channel displayed on the display device (14) in response to an operation of changing the measurement target channel by the channel change buttons (13a, 13b), and moves a display position of the different colors or different brightness and updates and displays a measurement result of the analysis measurement to a measurement result relevant to the changed measurement target channel.

14. The digital broadcasting signal analyzing apparatus according to claim 7, **characterized in that** the measurement target channel is changed in response to an operation of changing the measurement target channel by the channel change buttons (13a, 13b), and a result of the analysis measurement in the changed measurement target channel is displayed together with a center frequency of the channel.

15. The digital broadcasting signal analyzing apparatus according to claim 9 or 10, **characterized in that** the control section (35) has: an analysis measurement control section (36) which makes control of the analysis measuring section 11; a spectrum measurement control section (37) which makes control relevant to the spectrum measuring section 12; and a channel frequency memory (38) having stored frequency information of each channel of the digital broadcasting;
an operation of specifying a measurement target channel by the operating section (13) is made valid by analysis measurement by the analysis measuring section (11) and spectrum measurement by the spectrum measuring section (12); and
the channel frequency memory (38) can be shared by the analysis measurement control section (36) and the spectrum measurement control section (37).

16. The digital broadcasting signal analyzing apparatus according to claim 15, **characterized in that** the analysis measurement control section (36) has a receiving frequency setting section (16b), a measurement item setting section (16c), and an analysis measurement result display section (16d);
when analysis measurement relevant to the digital broadcasting signal is specified by the operating section (13) and a measurement target channel and a measurement item are specified, the receiving frequency setting section (16b) reads out from the channel frequency memory (38) frequency information corresponding to the measurement target channel specified by the operating section (13), sets the read out information to the frequency converter section (11a) of the analysis measuring section (11) or the common frequency converter section (10b) to receive the signal of the measurement target channel;
the measurement item setting section (16c) sets information of the measurement item specified by the operating section (13) to the demodulator section (11b) and the computation processing section (11c), and then, causes a measuring process relevant to the specified measurement item to be made; and
the analysis measurement result display section (16d) causes the display device (14) to display the analysis measurement result obtained by the computation processing section (11c).

17. The digital broadcasting signal analyzing apparatus according to claim 15, **characterized in that** the spectrum measurement control section (37) has a measurement frequency range setting section (17a), a spectrum display section (17b), and the identification display section (39);
the measurement frequency range setting section (17a), at the time of spectrum measurement, detects data of a spectrum waveform in a measurement frequency range specified by setting to the spectrum measuring section (12) information corresponding to the measurement frequency range specified by the operating section (13);
the spectrum display section (17b) causes the display device (14) to display a spectrum waveform detected by the spectrum measuring section (12) together with a quadrature coordinate of a horizontal axis frequency and vertical axis power; and
the identification display section (39) reads out from the channel frequency memory (38) frequency information corresponding to a measurement target channel specified by operation of the operating section (13), and then, identifiably displays on a screen of the display device (14) a spectrum waveform of the measurement target channel and a spectrum waveform of another channel.

18. The digital broadcasting signal analyzing apparatus according to claim 6, **characterized in that** the channel change buttons (13a, 13b) for changing the measurement target channel can change to a measurement target channel of a channel immediately beneath or a channel immediately above the channel every one operation.

19. The digital broadcasting signal analyzing apparatus according to claim 6 in the case of following claim 4, **characterized in that** a zone marker center position button (13d) to move the zone marker (M) displayed on the display device (14) to a center position is displayed as part of the operating section (13) on the display device (14); and
the control section (35), when the zone marker center position button (13d) has been operated, displays an odd-numbered measurement target channel on the display device (14), thereby moving to and displaying on a center position together with the zone marker (M) the odd-numbered measurement target channel specified by operation of the operating section (13).

20. The digital broadcasting signal analyzing apparatus according to claim 18 or 19, **characterized in that** a mouse cursor (13c) to operate the channel change buttons (13a, 13b) for change of the measurement target channel or the zone marker center position button (13d) is displayed on the display device (14) as part of the operating section (13).

21. The digital broadcasting signal analyzing apparatus according to any one of claims 1 to 20, **characterized in that** the digital broadcasting signal includes a terrestrial digital broadcasting signal.

22. A digital broadcasting signal analyzing method comprising the steps of:
receiving a digital broadcasting signal, and making quality analysis of the digital broadcasting signal by an analysis setting section (11);
receiving the digital broadcasting signal, and making spectrum measurement of a pre-specified measurement frequency range by a spectrum measuring section (12);
specifying a measurement target channel for making the quality analysis and a measurement frequency range for making the spectrum measurement by an operating section (13);
displaying a result of the quality analysis and a spectrum waveform in the measurement frequency range by a display device (14);
storing in advance frequency information of each channel of the digital broadcasting signal by a channel frequency memory (38); and
controlling the analysis measuring section (11), the spectrum measuring section (12), and the display device (14), based on the channel frequency information stored in the channel frequency memory (38) in response to an operation of the operating section (13) by a control section (35),
**characterized in that** the digital broadcasting signal analyzing method further comprises the step of, at the time of the spectrum measurement, when arbitrary one of measurement target channel has been specified by the operating section (13), identifying a spectrum waveform displayed on the display device (14) in a frequency range corresponding to the measurement target channel from another spectrum waveform, based on the channel frequency information stored in the channel frequency memory (38) by means of an identification display section (39).

23. The digital broadcasting signal analyzing method according to claim 22, **characterized in that** the digital broadcasting signal includes a terrestrial digital broadcasting signal.
